# EUROPÄISCHE PATENTANMELDUNG

(11) **EP 0 747 201 A2**
(43) Veröffentlichungstag der Anmeldung: **11.12.1996**
(21) Anmeldenummer: 96107250.1
(22) Anmeldetag: 08.05.1996
(51) Int. Cl.: B29C 63/04, B29C 51/16

(54) **Verfahren und Vorrichtung zum Beschichten eines Verkleidungsteils und zum Umbuggen des Randes der Überzugsschicht um die Kante des Verkleidungsteils**

(30) Priorität: 05.06.1995 US 462200
(71) Anmelder: R + S STANZTECHNIK GmbH, 63073 Offenbach (DE)
(72) Erfinder: Spengler, Gerhard, 60388 Frankfurt 60 (DE)
(74) Vertreter: Schieferdecker, Lutz, Dipl.-Ing.

(57) **Zusammenfassung**

Ein verbessertes Verfahren und eine Vorrichtung zum Laminieren einer Überzugsschicht 6 auf ein Substrat 7 und zum Umbuggen und Laminieren der Überzugsschichtränder 61 auf die Rückseite des Substratrandes 71 sind in besonderem Maße geeignet, um fertige Verkleidungsteile 8 herzustellen, die eine stark konturierte dreidimensionale Form aufweisen. Ein Tragrahmen 30 hält das Überzugsschichtmaterial mit einer gewünschten Spannung, bis der Laminiervorgang begonnen hat, um ein Zerknittern und Durchsacken des Überzugsschichtmaterials auf ein stark konturiertes dreidimensionales Substrat 7 zu verhindern. Eine untere Form 10 nimmt das Substrat 7 auf, während eine obere Form 20 die Überzugsschicht 6 auf das Substrat 7 laminiert. Die obere Form 20 kann gegenüber einem Rahmen 23 zurückgezogen oder ausgefahren werden, der eine Aufnahme bildet, während Umbuggwerkzeuge 25 seitlich verlagerbar um den Umfang der Aufnahme für die obere Form 20 angeordnet sind. Der Laminiervorgang und die Formung werden eingeleitet, während die obere Form 20 über die Ebene der Umbuggwerkzeuge 25 hinaus oder unter diese ausgefahren ist und die Überzugsschicht 6 noch vom Tragrahmen 30 gehalten wird, und dann werden die beiden Formen 10, 20 zusammen in eine Stellung oberhalb der Ebene der Umbuggwerkzeuge 25 zurückgezogen, um den Umbuggschritt zu beginnen.

## Beschreibung

Die Erfindung bezieht sich auf ein Verfahren und eine Vorrichtung zum Herstellen eines Verkleidungsteils mit einem Substrat und einer auf das Substrat aufgebrachten Überzugsschicht, wobei ein Rand der Überzugsschicht um eine Substratkante umgebuggt ist.

Derartige Verkleidungsteile werden beispielsweise verwendet, um die Innenflächen von Kraftfahrzeugtüren zu bedecken. Üblicherweise enthalten Verkleidungsteile ein Substrat, das eine steife Abstützung bildet, und eine dekorative Überzugsschicht, die selbst aus mehreren Schichten bestehen kann, die miteinander verbunden sind. Die Überzugsschicht ist dann auf das Substrat laminiert. Das Substrat kann aus unterschiedlichen Materialien bestehen, beispielsweise synthetische Kunststoffe wie ABS oder Polypropylen, Faserstoff wie ein Werkstoff aus Holzfasern oder anderen natürlichen Fasern, die in Phenolharz oder dgl. eingebettet sind, Glasfaserteile und dgl. Die Überzugsschicht kann aus einem dekorativen Textilstoff, Leder, Vinyl oder ähnlichen Materialien bestehen, die vorzugsweise mit einer rückwärtigen Schaumstoffverstärkung, insbesondere Polyätherschaum, Polyäthylenschaum und dgl. verklebt sind. Eine Vielzahl unterschiedlicher Werkstoffe und Kombinationen von Werkstoffen sind zur Verwendung bei solchen Verkleidungsteilen bekannt.

Das Laminierverfahren sieht üblicherweise die Verwendung eines Klebers vor, der auf die Rückseite der Überzugsschicht aufgebracht wird, und wahlweise werden das Substrat und/oder der Kleber erwärmt, bevor die Überzugsschicht und das Substrat zusammengedrückt und laminiert werden. Es besteht schon seit langem das Problem, daß die Ränder der Überzugsschicht nicht ordentlich zurechtgemacht oder um die Randkante des Substrats herumgelegt werden können. Es ist wünschenswert, die Ränder der Überzugsschicht im die Substratkante umzubuggen, um eine ordentliche und saubere Kante des Verkleidungsteils zu erhalten und dabei zu einem Verhindern des Ablösens oder Auftrennens der Überzugsschicht vom Substrat an den Kanten des Verkleidungsteils beizutragen.

Das am 28. Juni 1994 erteilte US-Patent 5 324 384 (Spengler) sieht eine wirksame Lösung des vorgenannten Problems vor. Beispielsweise offenbart das US-Patent 5 324 384 eine Vorrichtung zum Herstellen von Verkleidungsteilen mit einer Oberform, einer Unterform und Randumbuggwerkzeugen, die rings um die Kanten der Unterform angeordnet sind. Ein Substrat wird mittels Vakuum an der Oberform gehalten. Eine Überzugsschicht wird quer über die Randumbuggwerkzeuge und die Unterform gelegt. Die Oberform bewegt sich gegenüber der Unterform, um das Substrat und die Überzugsschicht miteinander zu verbinden, und die Unterform bewegt sich in eine zurückgezogene Stellung gegenüber der Ebene der Umbuggwerkzeuge. Dann bewegen sich die Umbuggwerkzeuge hinter die Unterform, so daß die Überzugsschicht um die Kante des Substrats herum und auf die Rückseite des Substrats umgebuggt wird. Daraufhin bewegt sich die Unterform aufwärts in Richtung auf das Umbuggwerkzeug, um den Rand der Überzugsschicht gegen die Rückseite des Substrats anzudrücken.

Eine Vorrichtung gemäß dem US-Patent 5 324 384 hat sich als geeignet und wirksam für den vorgesehenen Zweck erwiesen, der Erfinder hat jedoch festgestellt, daß bestimmte Verbesserungen möglich sind. Die vorliegende Erfindung ist auf eine Verbesserung gegenüber der Erfindung nach dem US-Patent 5 324 384 gerichtet. Die gesamte Offenbarung dieses US-Patents 5 324 384 wird durch Bezugnahme in diese Anmeldung einbezogen und wird hier zur detaillierten Beschreibung von Merkmalen angeführt, die der vorliegenden Erfindung und dem älteren Patent gemeinsam sind.

Es wurde festgestellt, daß das Verfahren und die Vorrichtung, wie sie im US-Patent 5 324 384 beschrieben sind, nicht besonders gut für das Laminieren und zugehörige Umbuggen von Verkleidungsteilen geeignet sind, die eine scharf konturierte dreidimensionale Form aufweisen. Wenn die Formen und das Substrat zu stark in einer dreidimensionalen Form konturiert sind, hat sich gezeigt, daß die Dekorüberzugsschicht ungleichmäßig in die Vertiefungen der Unterform hineinsinken kann, so daß Falten und Runzeln in der Überzugsschicht gebildet werden, wenn diese auf das Substrat aufgebracht wird. Da ferner die Dekorüberzugsschicht nicht unter Spannung gehalten wird sondern ziemlich lose auf der Beschickungsfläche aufliegt, die von der Oberseite der Umbuggwerkzeuge gebildet ist, wird die Überzugsschicht leicht von der Beschickungsfläche abgezogen, wenn sich die Oberform abwärts bewegt und durch die Ebene der Überzugsschicht hindurchtritt. Dies kann auch zu einem Zerknittern oder Verrunzeln des Überzugsschichtmaterials führen.

Es wurde ferner festgestellt, daß sich das Aufbringen des Substrats auf die Oberform, wo ein Festhalten mit Vakuum erfolgt, sich vereinfachen läßt, beispielsweise durch Aufbringen des Substrats auf eine Unterform in Verbindung mit der Durchführung vonweiteren notwendigen strukturellen Abänderungen. Die Funktionalität, Haltbarkeit und Betreibbarkeit der Vorrichtung läßt sich ebenfalls verbessern, beispielsweise durch Vermeidung passiver, federnder Vorspannelemente wie Federn zum Aufbringen eines Umbuggdrucks.

Dementsprechend liegt der Erfindung die Aufgabe zugrunde, über die bereits im US-Patent 5 324 384 genannten Ziele hinaus folgende weitgere Teilaufgaben einzeln oder in Kombination zu erreichen:
Ein Verfahren und eine Vorrichtung zu schaffen, die in besonderem Maße zur Herstellung von scharfkonturierten dreidimensionalen Verkleidungsteilen geeignet ist, in dem eine Überzugsschicht auf ein Substrat laminiert und dreidimensional geformt wird und der Überzugsschichtrand um eine Kante des Substrats umgebuggt und angeklebt wird;
Faltenbildung oder Zerknittern einer Überzugsschicht zu vermeiden, die bei einem derartigen Verfahren und einer derartigen Vorrichtung auf ein Substrat laminiert wird, indem die Überzugsschicht mit einer kontrollierten Spannung gehalten wird, bis der Laminiervorgang begonnen hat;
das Aufbringen eines Substrats auf eine Form bei einem derartigen Verfahren und einer derartigen Vorrichtung zu vereinfachen;
die Durchführung eines solchen Verfahrens und den Aufbau einer solchen Vorrichtung zu vereinfachen und diese zu verkleinern;
eine mit der Überzugsschicht in Kontakt tretende Form bis in eine Stellung jenseits der Ebene der Umbuggwerkzeuge anzutreiben, um den Laminiervorgang einzuleiten, und dann die Form hinter die Ebene der Umbuggwerkzeuge zurückzuziehen, um den Laminiervorgang zu beenden und das Umbuggen bei einem derartigen Verfahren und einer derartigen Vorrichtung auszuführen;
bei einem derartigen Verfahren und einer derartigen Vorrichtung Stücke aus Überzugsschichtmaterial verwendbar zu machen, die vorgestanzt und vorgeschnitten und sogar vorgeformt sind, und die Notwendigkeit der Beschneidung nach Durchführung des Laminiervorgangs und des Umbuggens zu vermeiden;
zusätzliche Betätigungseinrichtungen wie Kolbenzylinderanordnungen zum abschließenden Einstellen des Laminier- und Umbuggdrucks vorzusehen und den Betriebszyklus zu vereinfachen; und
einen besonderen vorteilhaften Tragrahmen zum Halten der Überzugsschicht vorzusehen.

Die vorgenannte Erfindungsaufgabe wird mit einer erfindungsgemäßen Vorrichtung gelöst, die eine erste Form, eine zweite Form, einen Tragrahmen, ein Umbuggwerkzeug und entsprechende Antriebe für die Formen und für das Umbuggwerkzeug aufweist. Die erste Form weist eine Formfläche zur Aufnahme eines Substrats auf, das eine scharf konturierte dreidimensionale Form haben kann. Eine erste Hauptbetätigungseinrichtung wie eine Kolbenzylinderanordnung bewegt die erste Form in Richtung auf die zweite Form und von ihr weg. Vorzugsweise sind zweite Betätigungseinrichtungen wie Kolbenzylinderanordnungen vorgesehen, die zwischen der ersten Form und der ersten Hauptbetätigungseinrichtung angeschlossen sind, um eine zusätzliche, fein abgestimmte Antriebskraft auf die erste Form in Richtung auf die zweite Form oder von ihr weg aufzubringen, soweit es gewünscht ist.

Die zweite Form weist eine dreidimensional konturierte Formfläche auf, die im wesentlichen zu der Formfläche der ersten Form paßt. Eine zweite Hauptbetätigungseinrichtung wie eine Kolbenzylinderanordnung treibt die zweite Form in Richtung auf die erste Form oder weg von dieser an, soweit es gewünscht ist. Das Umbuggwerkzeug wird von einer Umbugg-Betätigungseinrichtung in einer Richtung angetrieben, die zumindest eine Richtungskomponente senkrecht zur Bewegungsrichtung der zweiten Hauptbetätigungseinrichtung aufweist, also zur Bewegungsrichtung der zweiten Form. Die zweite Hauptbetätigungseinrichtung ist dafür vorgesehen, die zweite Form über eine ausreichende Strecke gegenüber dem Umbuggwerkzeug zu bewegen, so daß die zweite Formfläche hinter eine Ebene des Umbuggwerkzeugs in eine zurückgezogene Stellung zurückgezogen, jedoch über die Ebene des Umbuggwerkzeugs hinaus in eine ausgefahrene Stellung ausgefahren wird.

Die Vorrichtung weist ferner eine Heizeinrichtung und eine Beschickungsstation für einen Tragrahmen auf. Greifer wie Klemmstangen sind auf den Tragrahmen montiert und dafür vorgesehen, eine Überzugsschicht mit einer gewünschten Spannung auf dem Tragrahmen zu halten. Der Tragrahmen und die Heizeinrichtung sind jeweils dafür ausgebildet und angeordnet, in Stellungen zwischen der ersten Form und der zweiten Form bewegt zu werden, so daß der Tragrahmen die Überzugsschicht nahe der zweiten Formfläche hält und die Heizeinrichtung zwischen der Überzugsschicht und dem Substrat angeordnet ist, das auf der ersten Formfläche angeordnet ist. Die erste Hauptbetätigungseinrichtung ist dafür vorgesehen, die erste Form durch den Tragrahmen hindurch zu bewegen, um einen Kontakt zwischen dem Substrat und der Überzugsschicht herzustellen und dann das Substrat und die Überzugsschicht zwischen der ersten Form und der zweiten Form miteinander zu verbinden, wobei die Überzugsschicht vom Tragrahmen gezogen wird.

Die vorgenannte Aufgabe wird ebenfalls mit einem erfindungsgemäßen Verfahren gelöst, bei dem die Überzugsschicht mit der gewünschten Spannung auf einem Tragrahmen gehalten wird. Die Überzugsschicht wird vorzugsweise auf den Tragrahmen in einer Beschickungsstation aufgebracht, von wo der Rahmen dann in eine Stellung zwischen der ersten Form und der zweiten Form bewegt wird. Ein Substrat ist auf der Formfläche der ersten Form angeordnet. Eine Heizeinrichtung wird vorzugsweise in eine Stellung zwischne der Überzugsschicht und dem Substrat bewegt. Nachdem die Überzugsschicht und das Substrat auf geeignete Temperaturen aufgeheizt wurden, um den Laminiervorgang durchzuführen, wird die Heizeinrichtung wieder zurückgezogen. Als nächstes wird die erste Form durch die zentrale Öffnungsfläche des Tragrahmens bewegt, so daß das auf der ersten Form angeordnete Substrat in Berührung mit der Überzugsschicht tritt, und dann werden die Überzugsschicht und das Substrat zwischen den Formen zusammengedrückt, womit der Formvorgang und das Laminieren beginnen.

Die erste Form wird ferner so angetrieben, daß die Überzugsschicht vom Tragrahmen abgezogen wird und der Laminiervorgang bei der Bewegung gegen die zweite Form fortgesetzt wird. Die erste Form und die zweite Form werden zusammen hinter die Ebene der Umbuggwerkzeuge zurückgezogen, und dann werden die Umbuggwerkzeuge in einer Richtung, die eine Komponente senkrecht zur Bewegungsrichtung der ersten Form und der zweiten Form aufweist, ausgefahren, so daß ein Rand der Überzugsschicht hinter die Kante des Substrats umgebuggt wird. Als nächstes werden die erste Form und die zweite Form zusammen wieder in entgegengesetzter Richtung bewegt, also etwas aus der zurückgezogenen Stellung heraus, so daß die Umbuggwerkzeuge sich hinter die Substratkante erstrecken, um den Überzugsschichtrand auf die Rückseite des Substrats umzuschlagen und anzukleben. Schließlich werden die Formen wieder in die zurückgezogene Stellung bewegt, so daß die Umbuggwerkzeuge zurückgezogen werden können, worauf die Formen in ihre Ausgangsstellungen zurückbewegt werden können und das fertiggestellte Verkleidungsteil von der ersten Form entnommen werden kann.

Ein Ausführungsbeispiel der Erfindung wird nachfolgend anhand einer schematischen Zeichnung näher erläutert. Darin zeigen:
- Figur 1: einen schematischen Querschnitt mit einer allgemeinen Übersicht der verschiedenen Komponenten entsprechend der Erfindung;
- Figur 2: eine Draufsicht auf den Tragrahmen entsprechend der Erfindung in Richtung des Pfeils II in Figur 1;
- Figur 3: einen Querschnitt, der das Aufbringen eines Überzugsschichtmaterials auf einen Tragrahmen in einer erfindungsgemäßen Beschickungsstation zeigt;
- Figur 4: einen Querschnitt einer ersten Formgruppe, die eine untere Formgruppe bildet, und einer zweiten Formgruppe, die eine obere Formgruppe bildet, entsprechend der Erfindung;
- Figur 5: einen Querschnitt mit einer Zwischenstellung des Tragrahmens, der aus der Beschickungsstation in eine Stellung zwischen den Formgruppen bewegt wird;
- Figur 6: einen Querschnitt, der den Tragrahmen und eine Heizeinrichtung zeigt, die in Stellungen zwischen der oberen Formgruppe und der unteren Formgruppe bewegt wurden;
- Figur 7: einen Querschnitt, der den Beginn des Laminierens einer Überzugsschicht auf ein Substrat zwischen der ersten Form und der zweiten Form zeigt, wobei die Überzugsschicht vom Tragrahmen abgezogen wird;
- Figur 8: einen Querschnitt, der das fortgesetzte Laminieren der Überzugsschicht auf das Substrat und den ersten Schritt zeigt, mit dem die Umbuggwerkzeuge den Überzugsschichtrand um die Kante des Substrats umlegen;
- Figur 9: einen Querschnitt, der das fortgesetzte Laminieren der Überzugsschicht auf das Substrat und einen zweiten Umbuggschritt zeigt, bei dem der Überzugsschichtrand um und hinter die Substratkante umgebuggt und laminiert wird;
- Figur 10: einen Querschnitt, der die erste Form und die zweite Form nach ihrer Rückkehr in die Ausgangsstellungen zeigt, wobei ein fertiggestelltes Verkleidungsstück auf der ersten Form lagert.

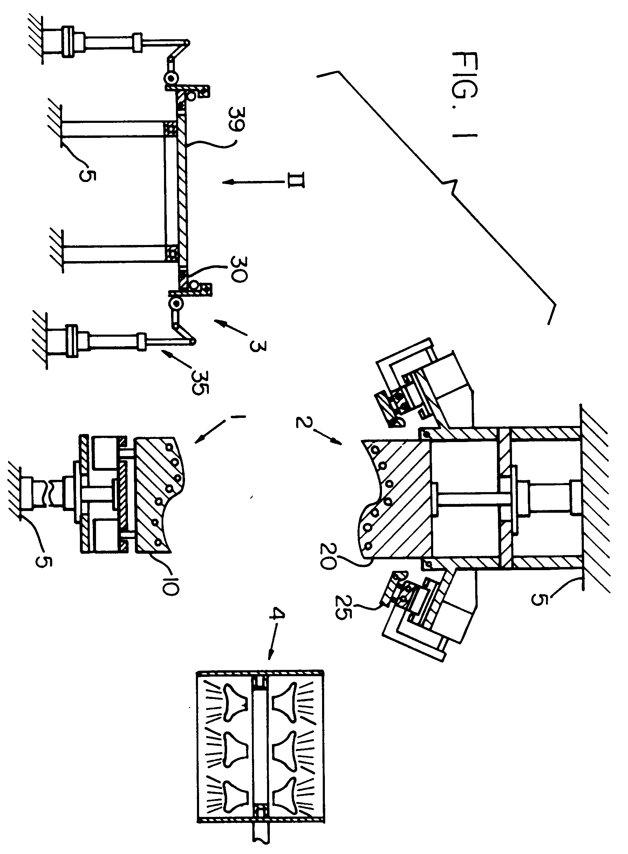

Wie allgemein in Figur 1 dargestellt, weist die erfindungsgemäße Vorrichtung eine erste Formgruppe 1, eine zweite Formgruppe 2, eine Tragrahmen-Beschickungsstation 3 und eine Heizeinrichtung 4 auf. Wie dargestellt sind die verschiedenen Komponenten auf einem Maschinenrahmen 5 befestigt, der nur schematisch angedeutet ist, der jedoch beliebig ausgeführt sein kann, wie es in der Fachwelt allgemein bekannt ist. Bei der hier beschriebenen spezifischen Ausführungsform bildet die erste Formgruppe 1 eine untere Formgruppe und die zweite Formgruppe 2 bildet eine obere Formgruppe. Die beiden Formgruppen bilden eine Formstation zum Formen und Laminieren einer Überzugsschicht auf ein dreidimensional konturiertes Substrat und dann zum Umbuggen der Ränder der Überzugsschicht um eine Kante des Substrats. Ferner kann ein Randabschnitt des Substrats ebenfalls zusammen mit der Überzugsschicht rückseitig umgeschlagen werden, um einen Kranz um den Verkleidungsteilrand zu bilden, wie es im einzelnen im vorgenannten US-Patent 5 324 384 beschrieben ist.

Die erste Formguppe 1 weist eine erste Form 10 auf, bei der es sich in dieser Ausführungsform um eine untere Form 10 handelt. Die zweite Formgruppe 2 weist eine zweite oder obere Form 20 und Umbuggwerkzeuge 25 auf. Die Tragrahmen-Beschickungsstation 3 weist einen Beschickungstisch 39 für ein Überzugsmaterial oder eine Überzugsschicht auf, und es sind Klemmöffnungseinrichtungen 35 nahe dem Beschickungstisch 39 angeordnet. Ein Tragrahmen 30 ist vorgesehen, um eine Überzugsschicht zu tragen. Er ist zwischen einer ersten Stellung am Beschickungstisch 39 und einer zweiten Stellung zwischen der ersten Formgruppe 1 und der zweiten Formgruppe 2 bewegbar. Der Tragrahmen 30 kann durch irgendeine bekannte Einrichtung bewegt werden, wie es einem Fachmann geläufig ist. Die Heizeinrichtung 4 ist gleichfalls mittels irgendeiner bekannten Einrichtung gegenüber dem Maschinenrahmen 5 bewegbar, so daß sich die Heizeinrichtung in eine und aus einer Stellung zwischen der ersten Formgruppe 1 und der zweiten Formgruppe 2 heraus bewegen läßt.

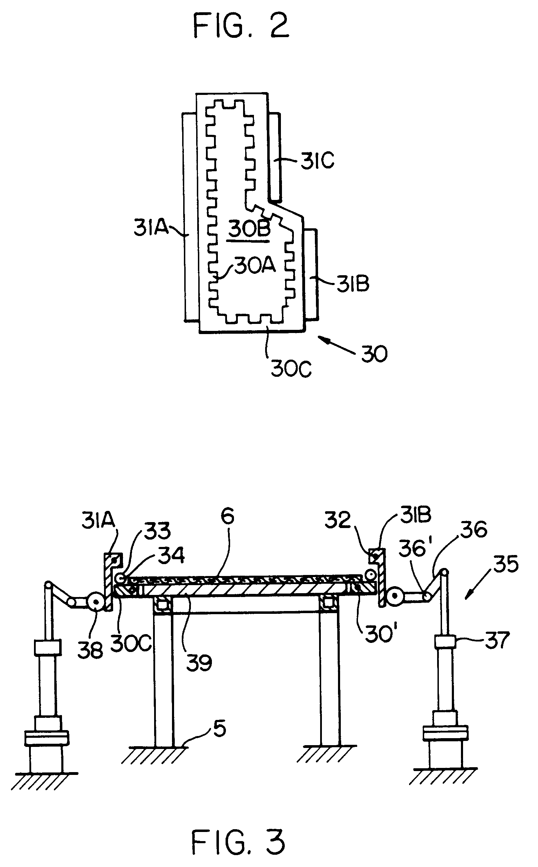

Gemäß Figuren 2 und 3 weist der Tragrahmen 30 vorzugsweise einen Umfangsrahmen 30 C und Klemmstangen 31 A, 31 B und 31 C auf, die die Überzugsschicht mit der gewünschten Haltespannung gegen den Tragrahmen 30 festklemmen. Dazu sind die Klemmstangen 31 mit entsprechenden Klemmgelenken 34 mit dem Umfangsrahmen 30 C verbunden, wobei zugehörige Klemmfedern 33 wie umfangsaktive Schraubenfedern vorgesehen sind, um die Klemmstangen 31 konstant in einer Richtung zu drücken oder vorzuspannen, so daß sie gegen den Umfangsrahmen 30 C klemmen. Die Klemmstangen können auch anders ausgeführt sein, beispielsweise können die Klemmstangen mit dem Tragrahmen durch federbelastete lineare Gleitstücke anstelle eines Gelenks verbunden sein.

Bei der Darstellung von Figur 3 wurde der Tragrahmen 30 in einer Ebene parallel zum Überzugsschicht-Beschickungstisch 39 angeordnet, und eine Überzugsschicht 6 wurde auf den Tisch 39 und den Tragrahmen 30 gelegt. Der Rahmen 30 und der Tisch 39 sind vorzugsweise bündig aufeinander ausgerichtet, um eine ebene Beschickungsfläche zu bilden, so daß der Tisch 39 die Überzugsschicht unterstützt, um ein Durchsacken oder ein Verknittern während der Beschickung zu verhindern. Der Tragrahmen 30 und der Beschickungstisch 39 sind als flache ebene Komponenten dargestellt, weil in diesem Beispiel die Überzugsschicht 6 eine flache Schicht ist. Jedoch ist es auch möglich, Überzugsschichten zu verwenden, die zumindest teilweise dreidimensional ausgebildet oder vorgeformt sind, wobei ein passend geformter Tragrahmen Verwendung finden würde. Ferner wurden die Außenkanten der Überzugsschicht 6 auf eine für das fertige Verkleidungsteil geeignete Form vorgeschnitten.

Figur 3 zeigt einen Zustand, bei dem die Klemmstangen 31 geöffnet wurden, um die Überzugsschicht 6 aufzunehmen. Dazu werden Kolbenzylindereinrichtungen 37 der Klemmöffnungseinrichtungen 35 ausgefahren. Als Folge schwenken die Hebelarme 36 um die betreffenden Gelenkachsen 36' in Richtung auf die Klemmstangen 31. Vorzugsweise ist eine Rolle 38 am äußeren oder freien Ende eines jeden Hebelarms 36 vorgesehen, um an einen vorspringenden Randbereich einer jeder Klemmstange 31 anzugreifen und ihn niederzudrücken und so die Klemmstangen um ihre Klemmgelenke 34 gegen die Kraft der Klemmfedern 33 zu drehen. Nachdem die Klemmstangen 31 geöffnet wurden, kann die Überzugsschicht 6 in der vorbeschriebenen Weise auf dem Tragrahmen 30 angeordnet werden, entweder von Hand oder mittels eines mechanisierten Förderers.

Vorzugsweise sind Kühlkanäle 30' im Umfangsrahmen 30 C vorgesehen, und Kühlkanäle 32 sind vorzugsweise in den Klemmstangen 31 ausgebildet. Eine Kühlflüssigkeit kann durch die Kühlkanäle zirkuliert werden, um die Komponenten zu kühlen und eine Überhitzung während der sich wiederholenden Betriebszyklen mit einem Aufheizschritt zu vermeiden, wie es nachfolgend beschrieben wird.

Wie in Figur 2 dargestellt, ist eine zentrale Öffnungsfläche 30 B in der Mittelfläche des Tragrahmens 30 vorgesehen. Die Kanten des Umfangsrahmens 30 C, die die zentrale Öffnungsfläche 30 B begrenzen, weisen Finger oder Zähne 30 A auf, die irgendeine gewünschte Zahnform aufweisen, jedoch wie dargestellt vorzugsweise rechteckig sind. Die Zähne 30 A dienen zwei Funktionen. Erstens gewährleisten die Zähne 30 A, daß der Umfangsrahmen 30 C eine ausreichende Kontaktfläche aufweist, gegen die die Klemmstangen 31 A, 31 B und 31 C die Überzugsschicht 6 klemmen, um ein angemessenes Ergreifen der Überzugsschicht zu erhalten. Zweitens führen die Öffnungen zwischen den Zähnen 30 A zur Freilegung abwechselnder Flächen längs des Randes der Überzugsschicht 6, so daß diese freiliegenden Flächen erwärmt werden können, wie es nachfolgend beschrieben wird, um den Kleber zu aktivieren, der vorangehend auf die Rückseite der Überzugsschicht aufgebracht wurde. Auf diese Weise wird ein gutes Anhaften des Überzugsschichtrandes auf der Rückseite des Substratrandes gewährleistet, weil zumindest abwechselnde Klebstoffflächen längs des Schichtrandes ordnungsgemäß wärmeaktiviert sind. Die einzelnen Abmessungen und die Form der Zähne 30 A kann entsprechend den verwendeten besonderen Materialien ausgewählt werden. Gute Ergebnisse wurden mit Zahnfingern erzielt, die eine Mindestweite von etwa 6 mm aber vorzugsweise von etwa 10 bis 40 mm aufweisen, und mit Spalten zwischen den Zahnfingern von etwa 10 bis 40 mm. Ferner können die Überzugsschicht und der Tragrahmen so dimensioniert werden, daß der Überzugsschichtrand etwas (beispielsweise 5 bis 10 mm) über die Außenkanten des Umfangsrahmens vorspringt, so daß ein zu erwärmender Randstreifen freiliegt.

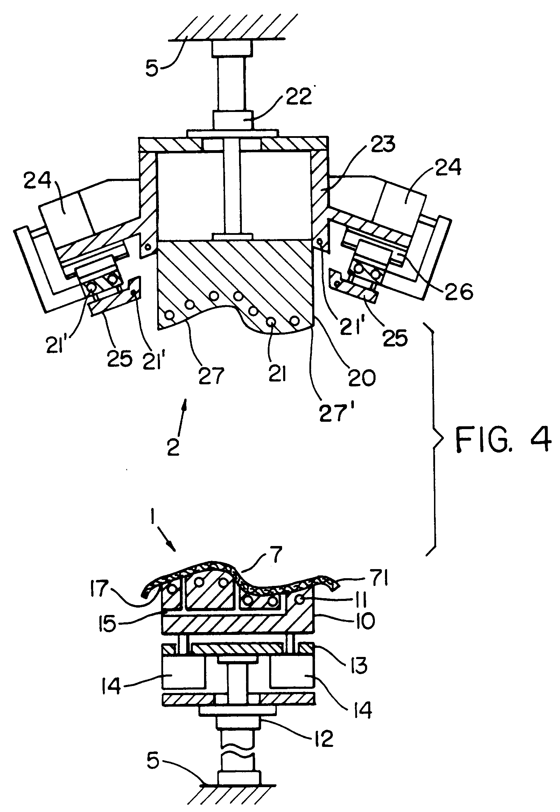

Wie in Figur 4 dargestellt, wurde eine Substrat 7 auf der ersten oder unteren Form 10 plaziert, entweder von Hand oder mittels einer geeigneten Fördereinrichtung. Die erste Form 10 ist mit einer ersten Formfläche 17 versehen, deren Form der vorgesehenen fertiggestellten dreidimensionalen Kontur des Substrats 7 entspricht. Zur Erleichterung der Beschickung sollte die erste Formfläche 17 etwa die gleiche Höhe wie der vorstehend beschriebene Beschickungstisch 39 aufweisen. Es sei darauf hingewiesen, daß die Stellungen der ersten Formgruppe 1 und der zweiten Formgruppe 2 vertauscht werden können, so daß die erste Formgruppe 1 eine obere Formgruppe bildet. Jedoch wird die in der Zeichnung dargestellte Ausführungsform wegen des einfachen Aufbringens eines Substrats 7 und des Auf- und Abnehmens des fertigen Verkleidungsteils von der ersten Form 10 bevorzugt.

Das Substrat 7 ist vorzugsweise wenigstens teilweise räumlich ausgebildet und vorgeformt, so daß es eine vergleichsweise stark dreidimensional konturierte Form aufweist. Beispielsweise kann das Substrat eine stark konturierte dreidimensionale Endform mit einer Änderung in der Konturhöhe von wenigstens 2 cm über die Substratfläche aufweisen, und insbesondere sogar eine Änderung in der Konturhöhe über das Substrat von wenigstens 5 cm. Um das Substrat 7 fest in seiner Stellung zu halten, können Vakuumkanäle 15 in der ersten Form 10 vorgesehen sein, wobei entsprechende Vakuumkanäle in der Oberfläche 17 der ersten Form münden. Zur Deutlichkeit sind die Vakuumkanäle in den anderen Figuren weggelassen. Kühlleitungen 11 sind vorzugsweise in der ersten Form 10 vorgesehen, so daß eine Kühlflüssigkeit durch die Form umgewälzt werden kann, um sie vor einer Überhitzung in den kontinuierlichen Betriebszyklen zu schützen und zum Aushärten des Laminierklebstoffs beizutragen.

Die erste Form 10 ist mit einer Formplatte 13 verbunden und auf dieser abgestützt, die ihrerseits mit der Kolbenstange einer ersten Hauptkolbenzylinderanordnung 12 verbunden ist. Die erste Hauptkolbenzylinderanordnung 12 weist einen vergleichsweise langen Betriebshub auf und kann hydraulisch oder pneumatisch betätigt werden, um die erste Form 10 gegenüber dem Maschinenrahmen 5 anzuheben und abzusenken. Die Betätigung der Kolbenzylinderanordnung 12 wird derart gesteuert, daß der nachfolgend beschriebene Betriebszyklus ausgeführt wird. Vorzugsweise sind zweite Formkolbenzylinderanordnungen 14 zwischen der ersten Form 10 und der Formplatte 13 angeordnet. Beispielsweise ist die Form 10 mit den Kolbenstangen und die Formplatte 13 mit den Zylindern der zweiten Kolbenzylinderanordnungen 14 verbunden. Die Anordnungen 14 weisen einen vergleichsweise kurzen Hub oder Schub auf, und sie können pneumatisch oder hydraulisch betätigt werden, um einen kurzen Schub oder fein eingestellte Schritte des Betriebszyklus durchzuführen, wie es nachfolgend beschrieben wird.

Unter weiterer Bezugnahme auf Figur 4 weist die zweite oder obere Form 20 eine zweite Formfläche 27 auf, die eine dreidimensionale Kontur besitzt, die im wesentlichen zu derjenigen der Formfläche 17 der ersten Form 10 paßt. Kühlkanäle 21 können in der zweiten Form 20 vorgesehen sein, damit eine Kühlflüssigkeit umgewälzt werden kann, ähnlich wie bei der ersten Form 10. Zusätzliche Kühlkanäle 21' sind vorzugsweise in den anderen Werkzeugkomponenten vorgesehen, die ebenfalls während des Betriebs einer Erwärmung ausgesetzt sind.

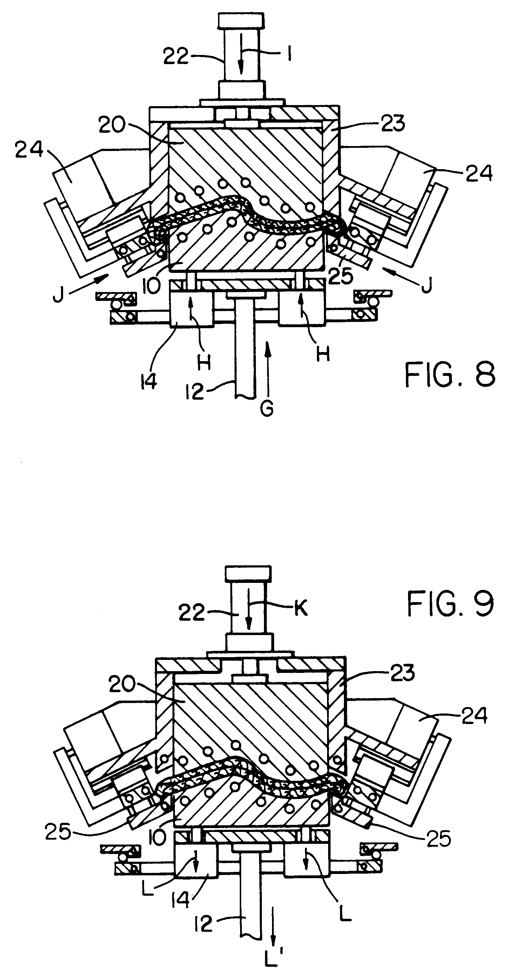

Die zweite Form 20 ist mit der Kolbenstange einer zweiten Hauptkolbenzylinderanordnung 22 verbunden. Ein zweiter Formrahmen 23, der mit dem Zylinder der Kolbenzylinderanordnung 22 und vorzugsweise ebenfalls mit dem Maschinenrahmen 5 verbunden ist, bildet eine Formaufnahme, in welche die zweite Form 20 zurückgezogen werden kann. Mit anderen Worten, die Kolbenzylinderanordnung 22 kann pneumatisch oder hydraulisch betätigt werden, um die Form 20 in die oder aus der Formaufnahme heraus zu bewegen, die vom Rahmen 23 gebildet ist. Insbesondere kann die Form 20 so zurückgezogen werden, daß die Formfläche 27 im wesentlichen bündig mit den Stirnflächen des Rahmens 23 angeordnet ist (siehe beispielsweise Figur 8). Andererseits kann die zweite Form 20 aus der vom Rahmen 23 gebildeten Aufnahme in einem ausreichenden Maß herausbewegt werden, so daß die Formfläche 27 über eine Umbuggebene hinausragt, in diesem Fall nach unten, die zwischen den als nächstes beschriebenen Umbuggwerkzeugen gebildet ist.

Die Umbuggwerkzeuge 25 sind im wesentlichen um den Umfang der Form 20 herum angeordnet, also um den Rahmen 23. Die Umbuggwerkzeuge 25 sind bewegbar auf Gleitschienen 26 montiert und mit Umbugg-Kolbenzylinderaggregaten 24 verbunden, welche die Umbuggwerkzeuge 25 mit seitlicher Bewegung zur Form 20 und weg von ihr antreiben können, um einen Umbuggvorgang wie unten beschrieben auszuführen. Die Gleitschienen 26 sind vorzugsweise unter einem geneigten Winkel gegenüber dem Formrahmen 23 und gegenüber der Achse des Kolbenzylinderaggregats 22 angeordnet. Dadurch sind die Umbuggwergkzeuge 25 zur Form 20 und weg von ihr in Richtungen nahezu senkrecht zur Bewegungsrichtung der Form 20 bewegbar, wobei aber auch eine Richtungskomponente parallel zur Achse des Kolbenzylinderaggregats 22 vorgesehen ist, so daß die Umbuggwerkzeuge sich besser hinter einen gekrümmten Rand des Substrats erstrecken können, wie es nachfolgend beschrieben ist. Die besondere Konstruktion und Wirkungsweise der verschiedenen Umbuggwerkzeuge, die eingesetzt werden können, sind in dem vorgenannten US-Patent 5 324 384 beschrieben.

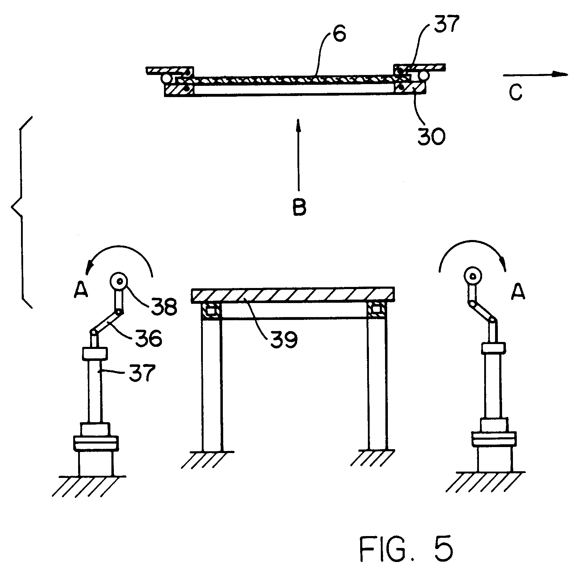

Figur 5 zeigt eine Folge von Schritten beim Festklemmen der Überzugsschicht 6 auf dem Trragrahmen 30 und beim Bewegen in die Stellung zwischen der ersten Formgruppe und der zweiten Formgruppe. Zunächst werden wie vom Pfeil A gezeigt, die Kolbenzylinderanordnungen 37 zurückgezogen, so daß die Hebelarme 36 geschwenkt und die Rollen 38 weg von den Klemmstangen 31 des Tragrahmens 30 angehoben werden. Die Federspannung der Klemmfedern 33 bewirkt, daß die Klemmstangen 32 die Überzugsschicht 6 fest gegen den Umfangsrahmen 30 C des Tragrahmens 30 klemmen. Als nächstes wird, wie vom Pfeil B angezeigt, der beladene Tragrahmen 30 vom Beschickungstisch 39 und der Beschickungsstation 3 abgehoben. Schließlich wird, wie es Pfeil C zeigt, der beladene Tragrahmen 30 in eine Stellung zwischen der oberen Formgruppe 2 und der unteren Formgruppe 1 bewegt, und zwar näher zur oberen Formgruppe 2. Der Tragrahmen 30 wird von einem Antriebsmechanismus getragen und bewegt, der nicht dargestellt ist, bei dem es sich aber um irgendeinen Mechanismus handeln kann, wie er dem Fachmann bekannt ist.

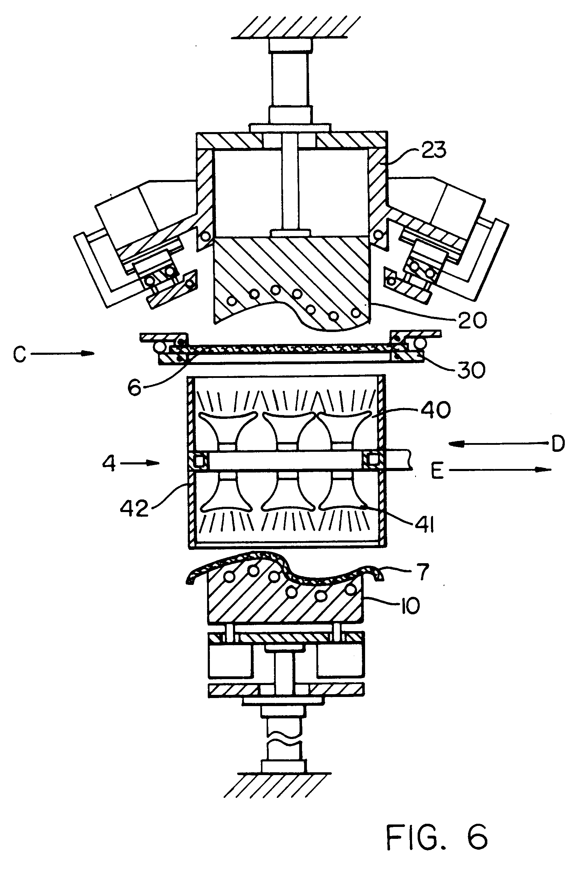

Gemäß Figur 6 wurde der Tragrahmen 30 in Stellung bewegt, wie es vorstehend beschrieben und durch den Pfeil C angedeutet ist. Vorzugsweise im wesentlichen gleichzeitig damit wird die Heizeinrichtung 4 in Stellung zwischen dem Tragrahmen 30 und der ersten Form 10 bewegt, wie es der Pfeil D anzeigt. Eine obere Gruppe von Heizkörpern 40 erwärmt somit die Unterseite der Überzugsschicht 6, bei der es sich beispielsweise um eine geschäumte Polsterfläche handeln kann, die mit einem durch Wärme aktivierbaren Kleber versehen sein kann, der darauf aufgebracht wurde (vergleiche z.B. US-Patent 5 324 384). Eine untere Gruppe von Heizkörpern 41 erwärmt die obere Fläche des Substrats 7.

Die obere Gruppe und die untere Gruppe von Heizkörpern 40 und 41 sind auf einem geeigneten Rahmen 42 montiert und sind vorzugsweise einzeln steuerbar, um die Überzugsschicht 6 und das Substrat 7 differenziert zu erwärmen, je nach den besonderen Materialien, die für die Überzugsschicht 6 und das Substrat 7 ausgewählt wurden. Die Heizkörper können von beliebiger Bauart sein, vorzugsweise sind jedoch Heizstrahler wie Infrarot-Strahler vorgesehen. Nach einer ausreichenden Erwärmung wird die Heizeinrichtung 4 in eine Ruhestellung außerhalb des Bereichs der Formen 10 und 20 zurückgezogen, wie es Pfeil E anzeigt. Als alternative Ausführungsform können auch die Heizkörper stationär angeordnet sein, während das Substrat und die Überzugsschicht an den Heizkörpern vorbei bewegt werden.

Während des Heizschritts ist der größte Teil der Rückseite der Überzugsschicht 6 direkt durch die zentrale Öffnungsfläche 30 B des Tragrahmens 30 der Infrarot-Wärme ausgesetzt. Ferner sind durch die Öffnungen zwischen den rechteckigen Zähnen 30 A des Tragrahmens 30 hindurch abwechselnde Flecken rund um den Rand der Überzugsschicht 6 ebenfalls der Infraroterwärmung ausgesetzt. Auf diese Weise ist gewährleistet, daß der wärmeaktivierbare Kleber auf der Rückseite der Überzugsschicht 6 ausreichend gleichförmig und gut aktiviert ist, selbst unmittelbar längs der Kante der Überzugsschicht 6. Auch wenn die Flächen am Rand der Überzugsschicht, die hinter den Zähnen 30 A des Tragrahmens 30 gehalten und dementsprechend abgeschirmt sind, nicht direkt erwärmt werden, bewirken doch die offenen Flächen zwischen den Zähnen 30 A eine ausreichende Aktivierung des Klebstoffs, um eine ordnungsgemäße Verbindung des Überzugsschichtrandes auf den rückseitigen Rand des Substrats zu gewährleisten, wenn das Umbuggen durchgeführt wird. Während des Heizschritts wird vorzugsweise Kühlflüssigkeit durch die Kühlkanäle 11 der Form 10 zirkuliert, um die äußere Fläche des Substrats 7 vor einer Überhitzung zu schützen. In ähnlicher Weise wird Kühlflüssigkeit durch die Kühlkanäle 30' und 32 des Tragrahmens 30 zirkuliert, und Kühlluft wird auf die Oberseite der Überzugsschicht 6 geblasen um die Überzugsschicht und insbesondere ihre Außenfläche vor einer Beschädigung infolge exzessiver Erwärmung zu bewahren. In den nachfolgenden Laminierschritten wird Kühlflüssigkeit durch die Kühlkanäle 11, 21 und 21' zirkuliert, um die Schichtung zu kühlen und zu verfestigen und beim Hartwerden oder Aushärten des Klebers zu helfen.

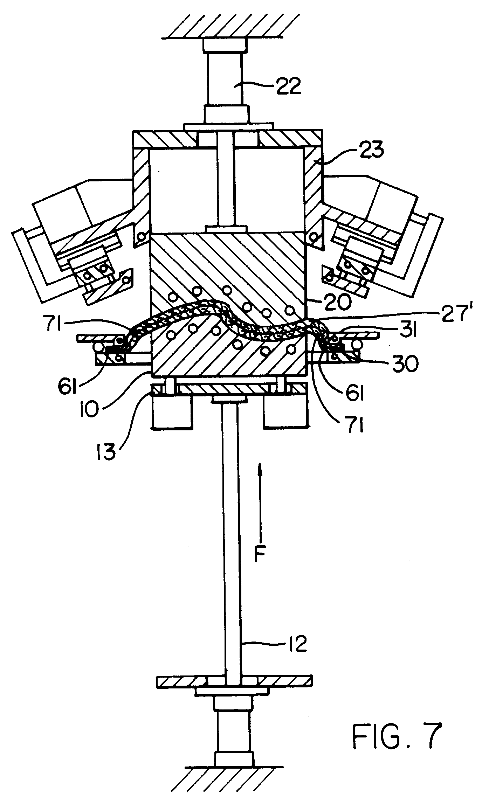

Gemäß Figur 7 wurde die erste oder untere Form 10 vom ersten Hauptkolbenzylinderaggregat 12 aufwärts bewegt. Namentlich wurde der Kolben des Kolbenzylinderaggregats 12 ausgefahren, um die Formplatte 13 und damit auch die Form 10 anzuheben. Die erste Form 10 hat somit das Substrat 7 durch die zentrale Öffnungsfläche 30 B des Tragrahmens 30 getragen, so daß das Substrat 7 gegen die Überzugsschicht 6 gestoßen wurde. Die Überzugsschicht 6 wird noch mit einer gewünschten Spannung im Tragrahmen 30 gehalten, aber die Überzugsschichtränder 61, die sich über die Substratkante 71 hinaus erstrecken, haben bereits damit begonnen, aus den Klemmstangen 31 des Tragrahmens 30 heraus zu gleiten oder gezogen zu werden. An diesem Punkt ist die zweite oder obere Form 20 in ihrer am stärksten ausgefahrenen Anfangsstellung, und das Substrat 7 und die Überzugsschicht 6 werden zusammen zwischen den beiden Formen eingeschlossen, so daß der Laminiervorgang und das Formen der Überzugsschicht 6 auf das Substrat 7 beginnen, während der Tragrahmen 30 noch die Überzugsschicht 6 mit einer gewünschten Spannung hält. Dementsprechend wird die Überzugsschicht 6 gleichförmig und glatt auf das Substrat 7 laminiert und geformt, ohne zu verknittern, durchzusacken oder andere unerwünschte Verformungen zu erfahren. Das anfängliche Laminieren und Formen hat mit unter die Ebene der Umbuggwerkzeuge ausgefahrener zweiter Formfläche 27 stattgefunden, so daß der Tragrahmen 30 die Überzugsschicht 6 während der anfänglichen Laminierung noch halten kann.

Wenn das erste Hauptkolbenzylinderaggregat 12 fortfährt, die Form 10 aufwärts zu drücken, wie es der Pfeil F in Figur 7 zeigt, werden die Überzugsschichtränder 61 gezogen und teilweise auf die Substratränder 71 durch die vom Tragrahmen 30 auf die Überzugsschicht 6 aufgebrachte Spannung vorlaminiert. Die Überzugsschichtränder 61 werden dann vollständig vom Tragrahmen 30 freigezogen, während die erste Form 10 und die zweite Form 20 sich zusammen aufwärts bewegen und der erforderliche Laminierdruck zwischen der ersten Form 10 und der zweiten Form 20 aufrecht erhalten wird. Das bedeutet, daß das erste Hauptkolbenzylinderaggregat 12 betätigt wird, um die Formen aufwärts zu bewegen, während das zweite Hauptkolbenzylinderaggregat 22 eine abwärts gerichtete Kraft aufbringt, die der Aufwärtsbewegung einen Widerstand in dem erforderlichen Maße entgegensetzt, um den erforderlichen Laminierdruck zu schaffen.

Wie aus Figur 8 ersichtlich wurde die Aufwärtsbewegung der Formen fortgesetzt, bis die zweite Form 20 in die vom Formrahmen 23 gebildete Aufnahme zurückgezogen ist, so daß die Formebene oder Formfläche, die zwischen der ersten Form 10 und der zweiten Form 20 gebildet ist, hinter oder vielmehr oberhalb einer Umbuggebene zurückgezogen ist, die als sich zwischen den Umbuggwerkzeugen 25 senkrecht zur Bewegungsrichtung der Formen erstreckend definiert ist. Der aufwärts gerichtete Formdruck des ersten Hauptkolbenzylinderaggregats 12 wird beibehalten, wie es Pfeil G zeigt, und der abwärts gerichtete Formdruck des zweiten Hauptkolbenzylinderaggregats 22 wird beibehalten, wie es Pfeil I zeigt. Die zweiten Formkolbenzylinderaggregate 14 können druckbeaufschlagt werden, wie es die Pfeile H zeigen, um eine Feineinstellung des Formdrucks zu erhalten, während das Laminieren und Formen der Überzugsschicht 6 und des Substrats 7 fortschreitet.

Die besondere Folge und der verwendete Druck zur Betätitung der verschiedenen Kolbenzylinderaggregate kann entsprechend den Notwendigkeiten für besondere Situationen eingestellt werden. Beispielsweise können die zweiten Formkolbenzylinderaggregate 14 in einer voll ausgefahrenen Stellung starten, wie es bereits in Figur 4 gezeigt ist, oder aber sie werden nur zur Zeit der Ausführung der Formung druckbeaufschlagt und ausgefahren, wie es in den Figuren 7 und/oder 8 gezeigt ist. Alternativ können die zweiten Kolbenzylinderaggregate 14 auch weggelassen werden, worauf ihre Funktion durch Vornahme feinfühliger Einstellungen in der Druckbeaufschlagung des ersten Hauptkolbenzylinderaggregats 12 übernommen würde.

Während das Laminieren und Formen der Überzugsschicht 6 und des Substrats 7 fortgesetzt wird, werden die Umbugg-Kolbenzylinderaggregate 24 betätigt, um die Umbuggwerkzeuge 25 einwärts auf die Seiten oder Kanten der ersten Form 10 zu bewegen. Dabei legen die Umbuggwerkzeuge 25 die Überzugsschichtränder 61 um die Substratkante 71 um, wie es in Figur 8 gezeigt ist.

Als nächstes wird, wie in Figur 9 gezeigt, das zweite Hauptkolbenzylinderaggregat 22 ausgefahren, wie es Pfeil K veranschaulicht, während die zweiten Formkolbenzylinderaggregate 14 und/oder das erste Hauptkolbenzylinderaggregat 12 zurückgezogen werden, wie es die Pfeile L und/oder L' veranschaulichen. Dementsprechend wird die zweite Form 20 etwas aus der vom Rahmen 23 gebildeten Aufnahme herausgedrückt, und die Formebene oder Formfläche, die zwischen der ersten Form 10 und der zweiten Form 20 gebildet ist, bewegt sich abwärts, so daß der Substratrand oder die Kante 71 abwärts gegen die Umbuggwerkzeuge 25 gestoßen wird. Vorzugsweise erstreckt sich ein Randbereich 27' der zweiten Formfläche 27 seitlich über die erste Form 10 hinaus, so daß der Randbereich 27' eine Gegenfläche bildet, gegen welche die Umbuggwerkzeuge drücken. Somit reichen die Umbuggwerkzeuge 25 hinter die Substratkante 71, um den Überzugsschichtrand 61 auf die Rückseite des Substratrandes zu laminieren und zu formen und die Umbugglaminierung zu komplettieren. Die besondere Wirkungsweise und der Aufbau verschiedener geeigneter Umbuggwerkzeuge sind mit Einzelheiten im US-Patent 5 324 384 beschrieben.

Die Drücke, die einerseits auf das zweite Hauptkolbenzylinderaggregat 22 und andererseits auf das zweite Formkolbenzylinderaggregat 14 und das erste Hauptkolbenzylinderaggregat 12 aufgebracht werden, werden ausgeglichen oder gesteuert, um den gewünschten Formungseffekt zu erhalten. Beispielsweise wird durch eine wesentliche oder vollständige Entlastung der aufwärts gerichteten, auf die untere Form 10 aufgebrachten Formkraft im wesentlichen die gesamte abwärts gerichtete Formkraft, die auf die obere Form 20 aufgebracht wird, zur Wirkung gegen die Umbuggwerkzeuge 25 gebracht, um einen hohen Umbugg-Laminierdruck zu erreichen. Alternativ kann eine aufwärts gerichtete Kraft auf die untere Form 10 beibehalten werden, um das Verbinden und Formen der Überzugsschicht 6 und des Substrats über die gesamte Oberfläche des Substrats fortzusetzen, während gleichzeitig die Umbugg-Randformung und Verbindung mit einem gewünschten ausgeglichenen Randdruck ausgeführt wird.

Nach Vollendung des Laminiervorgangs werden die beiden Formen zusammen ein wenig nach oben bewegt, um in einem in den Figuren nicht dargestellten Zwischenschritt den Substratrand 71 in eine von den Umbuggwerkzeugen 25 freie Stellung zu bewegen. Dies macht es möglich, daß die Umbuggwerkzeuge 25 freigegeben und zurückgezogen werden. Darauf werden die Umbugg-Kolbenzylinderanordnungen 24 betätigt, um die Umbuggwerkzeuge 25 von der Form 10 weg zu bewegen.

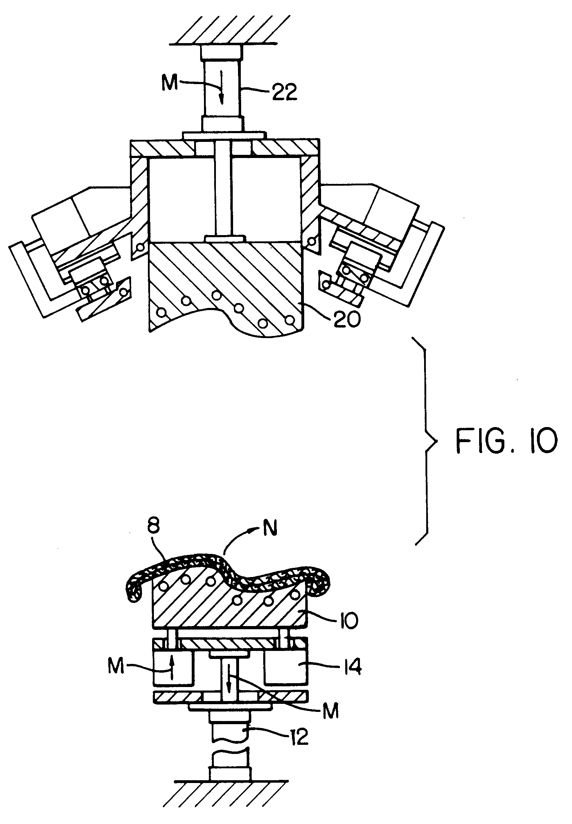

Als nächstes wird, wie in Figur 10 durch die Pfeile M dargestellt, das untere Hauptkolbenzylinderaggregat 12 wieder vollständig zurückgezogen, die zweiten Kolbenzylinderanordnungen 14 werden in ihre Ausgangspositionen bewegt, und die obere Hauptkolbenzylinderanordnung 22 wird ausgefahren, um die obere Form 20 in ihre Ausgangsstellung zu bewegen. In der Zwischenzeit wurde der Tragrahmen 30 in die Beschickungsstation 3 in seine in Figuren 1 und 3 gezeigte Anfangsstellung zurückbewegt. Schließlich wird das Vakuum abgeschaltet, das vorzugsweise auf die Vakuumkanäle 15 in der unteren Form 10 aufgebracht wurde, um das Substrat 7 zu halten, so daß das fertiggestellte Verkleidungsteil 8 der unteren Form 10 entnommen werden kann, wie es durch den Pfeil N angedeutet ist, und zwar entweder von Hand oder mittels einer mechanisierten Fördereinrichtung. Das fertiggestellte Verkleidungsteil 8 umfaßt die Überzugsschicht 6, die geformt und auf das Substrat 7 laminiert ist, wobei die Überzugsschichtkanten 61 umgelegt, eingeschlagen und auf die Rückseite des Substratrandes 71 laminiert sind.

Obwohl die Erfindung unter Bezugnahme auf spezielle Ausführungsbeispiele beschrieben wurde, sollen alle Abänderungen und Äquivalente erfaßt werden, die innerhalb des Bereichs der Patentansprüche liegen.

## Patentansprüche

1. Verfahren zum Herstellen eines Verkleidungsteils (8) mit einem Substrat (7) und einer Überzugsschicht (6), die auf das Substrat (7) laminiert ist, wobei ein Überzugsschichtrand (61) um eine Substratkante (71) umgebuggt und laminiert ist, unter Verwendung einer Vorrichtung mit einer ersten Form (10) mit einer ersten Formfläche (17), einer zweiten Form (20) mit einer zweiten Formfläche (27), einem Tragrahmen (30) und einem Umbuggwerkzeug (25), das in seitlicher Richtung gegenüber der Bewegungsrichtung der Formen (10, 20) bewegbar ist, **dadurch gekennzeichnet,** daß
(a) das Substrat (7) auf der ersten Formfläche (17) angeordnet wird;
(b) die Überzugsschicht (6) auf dem Tragrahmen (30) an einer Stelle zwischen der ersten Formfläche (17) und der zweiten Formfläche (27) gehalten wird;
(c) wenigstens eine der beiden Formen (10, 20) in Richtung auf die andere bewegt wird, bis das Substrat (7) und die Überzugsschicht (6) zwischen der ersten Formfläche (17) und der zweiten Formfläche (27) miteinander in Kontakt gebracht werden, während die Überzugsschicht (6) weiterhin gehalten wird;
(d) ein Laminierdruck auf das Substrat (7) und die Überzugsschicht (6) zwischen der ersten Formfläche (17) und der zweiten Formfläche (27) aufgebracht wird und die beiden Formen (10, 20) gegenüber dem Umbuggwerkzeug (25) in einer ersten Richtung bewegt werden, so daß die Substratkante (71) von der einen Seite auf die andere Seite eine Umbuggebene übertritt, die rechtwinklig zu dieser ersten Richtung durch das Umbuggwerkzeug (25) verläuft;
(e) das Umbuggwerkzeug (25) seitlich in Richtung auf die Formen (10, 20) bewegt wird, um den Überzugsschichtrand (61) um die Substratkante (71) herum zu stoßen; und
(f) die beiden Formen (10, 20) gegenüber dem Umbuggwerkzeug (25) in einer zur ersten Richtung entgegengesetzten zweiten Richtung bewegt werden, um die Substratkante (71) in Richtung auf das Umbuggwerkzeug (25) zu bewegen, so daß das Umbuggwerkzeug (25) den Überzugsschichtrand (61) auf die Rückseite des Substratrandes (71) laminiert.

2. Verfahren nach Anspruch 1, **dadurch gekennzeichnet,** daß im Anschluß an den Schritt (f):
(g) die beiden Formen (10, 20) in der ersten Richtung bewegt werden, um den Substratrand (71) vom Umbuggwerkzeug (25) weg in eine freie Stellung zu bewegen;
(h) das Umbuggwerkzeug (25) seitlich weg von den Formen (10, 20) bewegt wird;
(i) wenigstens eine der beiden Formen (10, 20) von der anderen Form (20 bzw. 10) wegbewegt wird; und
(j) das Verkleidungsteil (8) von der ersten Formfläche (17) entfernt wird.

3. Verfahren nach Anspruch 1 oder 2, **dadurch gekennzeichnet,** daß das Substrat (7) und die Überzugsschicht (6) vor dem Schritt (c) erwärmt werden.

4. Verfahren nach Anspruch 3, **dadurch gekennzeichnet,** daß zum Erwärmen eine Heizeinheit (4) in eine Stellung zwischen dem Tragrahmen (30) und der ersten Form (10) bewegt wird, worauf dann die Heizeinheit (4) vor dem Schritt (c) wieder zurückbewegt wird.

5. Verfahren nach Anspruch 3 oder 4, **dadurch gekennzeichnet,** daß das Aufwärmen und der Halteschritt (b) so ausgeführt werden, daß zumindest ein Teil des Überzugsschichtrandes (61) in Form von nicht aneinander angrenzenden Flächen längs des Überzugsschichtrandes (61) erwärmt wird.

6. Verfahren nach einem der Ansprüche 1 bis 5, **dadurch gekennzeichnet,** daß die Überzugsschicht (6) in einer Beschickungsstation (3) auf den Tragrahmen (30) aufgebracht wird, wobei Halteglieder (31) betätigt werden, um die Überzugsschicht (6) auf dem Tragrahmen (30) zu halten, worauf dann der Tragrahmen (30) in die Stellung zwischen der ersten Formfläche (17) und der zweiten Formfläche (27) bewegt wird, um Schritt (b) auszuführen.

7. Verfahren nach Anspruch 6, **dadurch gekennzeichnet,** daß der Tragrahmen (30) um einen Ladetisch (89) in der Beschickungsstation (3) angeordnet wird, so daß sich der Ladetisch (89) in einer zentralen Öffnungsfläche (30 B) des Tragrahmens (30) befindet und die am Tragrahmen (30) vorgesehene Stützfläche für die Überzugsschicht (6) im wesentlichen bündig mit einer am Beschickungstisch (89) vorgesehenen Stützfläche für die Überzugsschicht (6) ausgerichtet ist.

8. Verfahren nach einem der Ansprüche 1 bis 7, **dadurch gekennzeichnet,** daß während des Schritts (c) die erste Form (10) durch eine Öffnungsfläche (30 B) des Tragrahmens (30) bewegt wird.

9. Verfahren nach einem der Ansprüche 1 bis 8, **dadurch gekennzeichnet,** daß während des Schritts (d) der Überzugsschichtrand (61) mit dem Umbuggwerkzeug (25) in Berührung gebracht wird, um das Umschlagen des Überzugsschichtrandes (61) um die Substratkante (71) zu beginnen.

10. Verfahren nach einem der Ansprüche 1 bis 9, **dadurch gekennzeichnet,** daß der Laminierdruck zwischen der ersten Formfläche (17) und der zweiten Formfläche (27) während des Schritts (f) aufrecht erhalten wird.

11. Verfahren nach einem der Ansprüche 1 bis 9, **dadurch gekennzeichnet,** daß während des Schritts (f) der Laminierdruck zwischen der ersten Formfläche (17) und der zweiten Formfläche (27) verringert wird, so daß eine durch die zweite Form (20) aufgebrachte Formkraft einen vergrößerten Umbugg-Laminierdruck des Umbuggwerkzeugs (25) gegen den Überzugsschichtrand (61) auf der Rückseite des Substratrandes (71) hervorruft.

12. Verfahren nach einem der Ansprüche 1 bis 11, **dadurch gekennzeichnet,** daß während des Schritts (c) eine erste Hauptkolbenzylinderanordnung (12) ausgefahren wird, die mit der ersten Form (10) verbunden ist.

13. Verfahren nach Anspruch 12, **dadurch gekennzeichnet,** daß während des Schritts (d) die erste Hauptkolbenzylinderanordnung (12) ausgefahren und gleichzeitig eine zweite Hauptkolbenzylinderanordnung (22) zurückgezogen wird, die mit der zweiten Form (20) verbunden ist.

14. Verfahren nach Anspruch 12 oder 13, **dadurch gekennzeichnet,** daß während des Schritts (f) eine zweite Kolbenzylinderanordnung (14) zurückgezogen wird, die betriebsmäßig zwischen der ersten Hauptkolbenzylinderanordnung (12) und der ersten Form (10) angeordnet ist.

15. Verfahren nach einem der Ansprüche 1 bis 14, **dadurch gekennzeichnet,** daß die erste Form (10) eine untere Form ist, daß die zweite Form (20) eine obere Form ist, daß beim Schritt (c) die erste Form 10 aufwärts bewegt wird, daß die erste Richtung beim Schritt (d) im wesentlichen vertikal aufwärts gerichtet ist und daß die zweite Richtung beim Schritt (f) im wesentlichen vertikal abwärts gerichtet ist.

16. Verfahren nach einem der Ansprüche 1 bis 15, **dadurch gekennzeichnet,** daß beim Schritt (e) das Umbuggwerkzeug (25) in einer Richtung bewegt wird, die unter einem nicht rechten Winkel gegenüber der ersten Richtung geneigt ist.

17. Verfahren nach einem der Ansprüche 1 bis 16, **dadurch gekennzeichnet,** daß auf die erste Formfläche (17) ein Vakuum aufgebracht wird, um das Substrat (7) zu halten.

18. Verfahren nach einem der Ansprüche 1 bis 17, **dadurch gekennzeichnet,** daß die erste Form (10), die zweite Form (20), das Umbuggwerkzeug (25) und der Tragrahmen (30) gekühlt werden.

19. Verfahren nach einem der Ansprüche 1 bis 18, **dadurch gekennzeichnet,** daß vor dem Schritt (b) ein wärmeaktivierbarer Kleber auf diejenige Oberfläche der Überzugsschicht (6) aufgebracht wird, die beim Laminieren in Anlage an das Substrat (7) kommt.

20. Vorrichtung zum Herstellung eines Verkleidungsteils (8) mit einem Substrat (7) und einer Überzugsschicht (6), die auf das Substrat (7) laminiert ist, wobei ein Überzugsschichtrand (61) um eine Substratkante (71) umgebuggt und auflaminiert ist, insbesondere nach einem der Verfahren gemäß Ansprüchen 1 bis 19, mit einer ersten Form (10), die eine erste Formfläche (17) zur Kontaktierung des Substrats (7) aufweist, mit einer zweiten Form (20), die eine zweite Formfläche (27) zur Kontaktierung der Überzugsschicht (6) aufweist, mit einem ersten Formantrieb (12), der zum Antreiben wenigstens einer der beiden Formen (10, 20) in Richtung auf und in die Nähe der anderen Form in einer Formrichtung vorgesehen ist, um zwischen der zweiten Formfläche (27) und der ersten Formfläche (17) die Überzugsschicht (6) auf das Substrat (7) zu laminieren, mit einem Umbuggwerkzeug (25), das an einer Umfangskante der zweiten Form (20) angeordnet ist, um in einer Umbuggrichtung mit wenigstens einer Richtungskomponente senkrecht zur Formrichtung bewegbar zu sein, mit einem Umbuggantrieb (24), der mit dem Umbuggwerkzeug (25) verbunden ist, um es in der Umbuggrichtung anzutreiben, mit einem zweiten Formantrieb (22) zum Antreiben der zweiten Form (20) und/oder des Umbuggwerkzeugs (25) relativ zueinander parallel zur Formrichtung zwischen einer ersten Stellung, in der sich die zweite Formfläche (27) auf der einen Seite einer Umbuggebene befindet, und einer zweiten Stellung, in der sich die zweite Formfläche (27) auf der anderen Seite der Umbuggebene befindet, wobei die Umbuggebene eine Ebene ist, die durch das Umbuggwerkzeug (25) senkrecht zur Formrichtung verläuft, und mit einem Tragrahmen (30) zum freigebbaren Halten der Überzugsschicht (6) an einer Haltestellung auf der einen Seite der Umbuggebene, wobei der Tragrahmen (30) eine Öffnungsfläche (30 B) aufweist, durch welche die erste Form (10) durchtreten kann.
